# FASCICULE DE BREVET EUROPEEN

(11) **EP 1 734 208 B1**
(45) Date de publication et mention de la délivrance du brevet: **16.07.2008**
(21) Numéro de dépôt: 06300531.8
(22) Date de dépôt: 29.05.2006
(51) Int. Cl.: E05B 1/00, B60N 3/02

(54) **Agencement d'un élément d'habillage, pour véhicule automobile, formant une poignée de préhension**
Handgriff formende Kraftfahrzeugverkleidingsteilanordnung
Vehicle trim element arrangement forming gripping handle

(30) Priorité: 16.06.2005 FR 0551651
(43) Date de publication de la demande: 20.12.2006
(73) Titulaire: Renault SAS, 92100 Boulogne Billancourt (FR)
(72) Inventeur: JOSSE, Pascal, 78500, SARTROUVILLE (FR)

(56) Documents cités:
- EP-A- 0 187 990
- DE-A1- 10 204 168
- US-A- 6 092 858

## Description

L'invention concerne un agencement d'un élément d'habillage formant une poignée de préhension d'axe X, comportant au moins une coque support, en utilisation en appui contre un panneau, et une coque de fermeture qui coopère avec la coque support suivant au moins un premier et un second plan de jonction.

Il est connu dans l'état de la technique, par exemple du document DE-A-102 04 168, des agencements pour le montage d'un élément d'habillage de poignée monté sur un support. Ces poignées sont généralement formées de deux coques, une première formant support et fixée sur le panneau d'habillage par des vis et une seconde formant un élément de fermeture de la forme. La jonction des deux coques est formée par des appuis rectilignes qui divisent la poignée en deux parties sensiblement égales. Le sens de montage de la coque de fermeture est perpendiculaire au panneau de porte.

Cependant, la ligne de jonction forme une zone de préhension désagréable au toucher en particulier lorsque la continuité de la forme n'est pas parfaite entre les deux coques. De plus, pendant l'utilisation une mauvaise sollicitation de la poignée, notamment en concentrant l'effort de traction sur la coque de fermeture, accentue ce défaut et crée à long terme un jeu de séparation des deux coques, ce qui produit également un défaut d'aspect.

Afin de pallier ces inconvénients, l'invention a pour objet un agencement d'un élément d'habillage pour véhicule automobile formant une poignée de préhension, formée de deux coques tout en étant confortable et résistante à l'utilisation.

De plus l'invention a pour objet un agencement permettant le montage de la coque de fermeture selon une direction parallèle au panneau de fixation de la première coque, sans risque de détérioration (création de rayures par exemple) des éléments d'habillage visibles.

A cet effet, l'invention propose un agencement d'un élément d'habillage formant une poignée de préhension du type cité ci-dessus, caractérisé en ce que le premier plan et le second plan de jonction sont reliés, dans une partie frontale de la poignée, par une surface enveloppante formant une zone de préhension continue qui se prolonge, sensiblement jusqu'à l'axe X, par un recouvrement partiel de la coque de fermeture, la surface étant formée par la coque support.

Selon d'autres caractéristiques préférées de l'invention:
- La coque de fermeture passe, selon une translation dont la direction est sensiblement parallèle au plan du support, d'une position initiale de mise en place à une position intermédiaire, l'agencement comportant des moyens de guidage de la coque de fermeture selon la direction de montage et des moyens de pré maintien de la coque de fermeture en position intermédiaire.
- Les moyens de guidage consistent en un pion, porté par la coque de fermeture, apte à glisser le long d'une paroi d'appui de la coque support, sensiblement parallèle au plan du support, jusqu'à ce que le pion pénètre dans un logement ménagé dans ladite paroi.
- Les moyens de guidage comprennent en outre une nervure en forme de V localisée à la périphérie du logement de manière à pouvoir guider le pion jusqu'audit logement et à former une butée.
- Les moyens de pré-maintien en position intermédiaire sont constitués par la coopération du pion avec le logement.
- La coque de fermeture passe de sa position intermédiaire à une position finale de montage par un appui dont le sens est dirigé selon le sens initial de montage de manière à solidariser la coque de fermeture et la coque support par des moyens d'agrafage.
- Des moyens de maintien de la coque de fermeture contre la coque support sont répartis le long des bords de la coque support.
- La coque de fermeture comporte au moins un moyen de verrouillage de la coque de fermeture en position montée.
- Le moyen de verrouillage est constitué par la coopération du pion avec le logement.

D'autres caractéristiques et avantages de l'invention apparaîtront à la lecture de la description d'exemples de réalisation d'un agencement d'un élément d'habillage, pour véhicule automobile, formant une poignée de préhension en référence aux dessins annexés dans lesquels :
- La figure 1 est une vue en perspective de l'agencement avant montage.
- La figure 2 est une vue en perspective de l'agencement après montage.
- La figure 3 est une vue en coupe transversale selon la direction III-III de l'agencement de la figure 2.

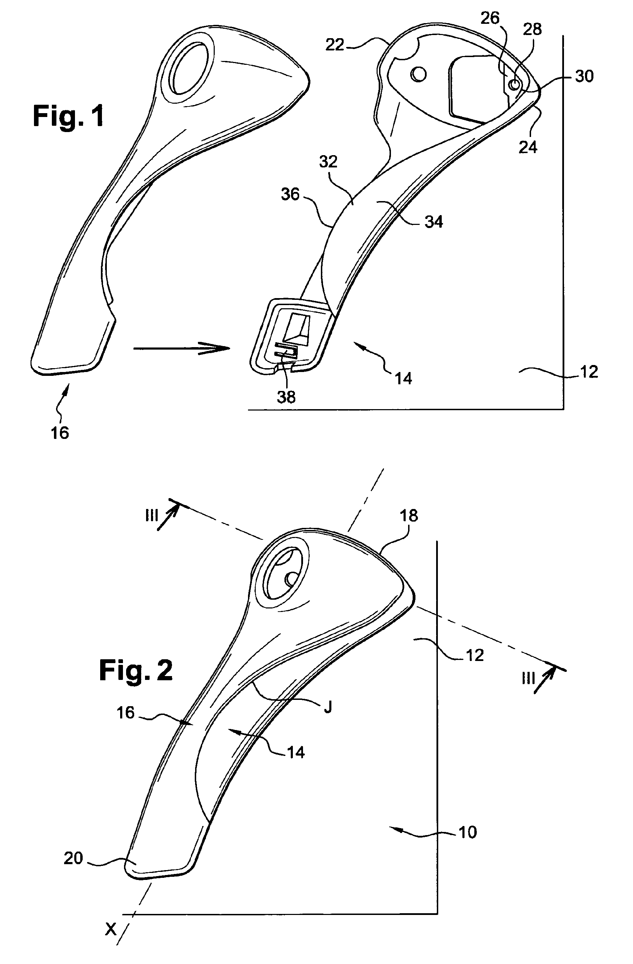

Tel que représenté à la figure 1, l'agencement comporte une poignée 10 d'axe longitudinal X, montée sur un support 12 et se composant d'une coque support 14 et d'une coque de fermeture 16. Dans le cas décrit ici, il peut s'agir d'une poignée agencée sur un panneau intérieur de porte. Dans une variante, non représentée, l'extrémité inférieure 20 de la poignée peut être fixée sur un accoudoir du panneau de porte.

La coque support 14 est fixée sur le panneau de porte 12 par sa première extrémité supérieure 18 et sa deuxième extrémité inférieure 20 au moyen, par exemple, de vis (non représentées).

L'extrémité 18 de la poignée forme un premier plan de jonction, entre la coque de fermeture 16 et la coque support 14, sensiblement parallèle au plan du panneau de porte 12.

Au niveau de la deuxième extrémité inférieure 20, la coque support 14 forme un second plan de jonction qui comporte un moyen de clippage 38 de la coque de fermeture 16. Ce deuxième plan de jonction n'est pas obligatoirement parallèle au premier plan de jonction.

De plus la ligne de jonction J entre la coque support 14 et la coque de fermeture 16 n'est pas constante tout au long de la poignée. Le premier plan et le second plan de jonction sont reliés, dans une partie frontale de la poignée par une surface enveloppante 34 formant une zone de préhension continue qui se prolonge, sensiblement jusqu'à l'axe X, par un recouvrement partiel de la coque de fermeture 16, la surface 34 étant formée par la coque support 14.

Le montage de la coque de fermeture 16 s'effectue donc selon une direction sensiblement parallèle au plan du panneau 12.

La coque support 14, comporte, au niveau de la première extrémité 18 de la poignée 10, un premier bord longitudinal 22, dit bord d'attaque, qui correspond au bord qui entre en premier en contact avec la coque de fermeture 16 lors du montage, et un deuxième bord longitudinal 24, séparé du bord d'attaque 22 par une surface 26, dite surface d'appui, sensiblement parallèle au plan du panneau de porte 12. Un logement 28 est ménagé dans la surface d'appui 26, à proximité du deuxième bord longitudinal 24.

Il est aussi prévu, à la périphérie du logement 28, une nervure 30 en forme de V dont l'ouverture est dirigée vers l'intérieur de la coque support 14.

Sur le premier bord longitudinal 32 de la zone de préhension 34 de la coque support 14 est prévu au moins un moyen d'agrafage 36.

La coque de fermeture 16 présente une forme complémentaire de celle de la coque support 14 de façon à former avec elle, une fois en position montée, une poignée 10 d'aspect homogène et esthétique. La jonction, en particulier au niveau de la partie frontale, entre les deux coques 14 et 16, est localisée sensiblement au niveau de l'axe X ce qui permet d'obtenir un contact lisse sans aspérité et sans risque de déformation.

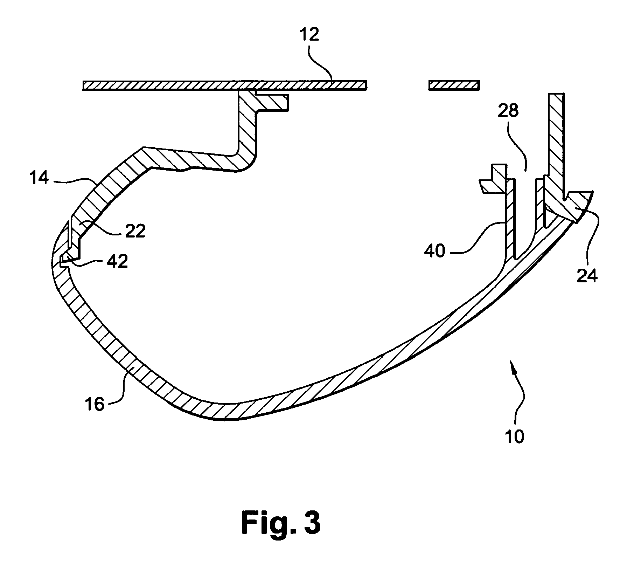

Tel que représenté à la figure 3, au niveau de la première extrémité supérieure 18 de la poignée 10, la coque de fermeture 16 comporte, sur sa face interne, un pion 40 destiné à coopérer avec le logement 28.

Entre les deux extrémités 18 et 20, la coque de fermeture 16 comporte aussi des moyens de réception destinés à coopérer avec les moyens d'agrafage 36 de la coque support 14.

Au niveau de la deuxième extrémité inférieure 20 de la poignée 10, la coque de fermeture 16 comporte un orifice de réception du moyen de clippage 38 de la coque support 14.

Le procédé de montage par un opérateur de l'élément d'habillage 16 sur le corps de poignée 14 comporte plusieurs étapes.

Selon une première étape, la coque de fermeture 16 passe d'une position initiale de mise en place à une position intermédiaire, par un guidage, depuis le bord d'attaque 22, du pion 40 de l'élément d'habillage 16 le long de la surface d'appui 26 de la coque support 14 jusqu'à ce que ledit pion 40 pénètre dans le logement 28.

Dans le cas où le pion 40 serait un peu décalé par rapport au logement 28, la nervure 30 permet de guider et de recentrer le pion 40. La nervure 30 forme aussi une butée qui limite, pour l'opérateur, le risque d'amener, pendant le mouvement de translation, la coque de fermeture 16 au-delà de la coque support 14, ce qui pourrait alors abîmer le support 12.

Une fois le pion 40 en place à l'intérieur du logement 28, l'agencement se trouve en position intermédiaire dite de pré maintien, ce qui permet de procéder au reste des opérations.

Dans une deuxième étape, l'opérateur effectue un appui sur la coque de fermeture 16 selon une direction identique au sens de montage initial de façon à faire passer l'agencement de sa position intermédiaire à une position finale montée. Plus particulièrement, il exerce un appui entre les extrémités 18 et 20 de la poignée 10, sur le premier bord longitudinal 32 de la coque support 14 de façon à faire coopérer les moyens d'agrafage 36 de la coque support 14 avec les moyens de réception complémentaires de la coque de fermeture 16.

Dans une troisième étape, l'opérateur peut verrouiller l'extrémité inférieure 20 de la poignée 10 en faisant coopérer le moyen de clippage 38 avec l'orifice de réception prévu sur la coque de fermeture 16. Il peut être prévu qu'un outil, tel qu'un tournevis, soit nécessaire pour le démontage de la coque de fermeture 16 au niveau de l'extrémité inférieure 20 de la poignée 10.

Avantageusement, l'agencement peut comporter des moyens de maintien supplémentaires 42, tels que des moyens d'encliquetage répartis le long des bords de la coque support 14, de manière à assurer un bon plaquage de la coque de fermeture 16 sur la coque support 14 et de cette façon une bonne qualité de montage.

Ainsi, lorsque l'agencement est en position finale montée, le pion 40 empêche la translation accidentelle de la coque de fermeture 16 en sens inverse dans le cas où une traction serait exercée sur la coque de fermeture 16. De plus, le moyen de verrouillage 38 prévus sur l'extrémité inférieure 20 de la poignée étant difficilement accessible et, pour des raisons de sûreté, nécessitant un outil, le montage de l'élément d'habillage 16 est sûr et robuste.

## Revendications

1. Agencement d'un élément d'habillage formant une poignée de préhension d'axe (X), comportant au moins une coque support (14), en utilisation en appui contre un panneau (12), et une coque de fermeture (16) qui coopère avec la coque support (14) suivant au moins un premier et un second plan de jonction, **caractérisé en ce que** le premier plan et le second plan de jonction sont reliés, dans une partie frontale de la poignée, par une surface enveloppante (34) formant une zone de préhension continue qui se prolonge, sensiblement jusqu'à l'axe (X), par un recouvrement partiel de la coque de fermeture (16), la surface (34) étant formée par la coque support (14).

2. Agencement selon la revendication 1, **caractérisé en ce que** la coque de fermeture (16) passe, selon une translation dont la direction est sensiblement parallèle au plan du support (12), d'une position initiale de mise en place à une position intermédiaire, l'agencement comportant des moyens de guidage de la coque de fermeture (16) selon cette direction et des moyens de pré-maintien de la coque de fermeture (16) en position intermédiaire.

3. Agencement selon la revendication précédente, **caractérisé en ce que** les moyens de guidage consistent en un pion (40), porté par la coque de fermeture (16), apte à glisser le long d'une paroi d'appui (26) de la coque support (14), sensiblement parallèle au plan du support (12), jusqu'à ce que le pion (40) pénètre dans un logement (28) ménagé dans ladite paroi (26).

4. Agencement selon la revendication précédente, **caractérisé en ce que** les moyens de guidage comprennent en outre une nervure (30) en forme de V localisée à la périphérie du logement (28) de manière à pouvoir guider le pion (40) jusqu'audit logement (28) et à former une butée.

5. Agencement selon l'une quelconque des revendications 2 à 4, **caractérisé en ce que** les moyens de pré-maintien en position intermédiaire sont constitués par la coopération du pion (40) avec le logement (28).

6. Agencement selon l'une quelconque des revendications 2 à 5, **caractérisé en ce que** la coque de fermeture (16) passe de sa position intermédiaire à une position finale de montage par un appui dont le sens est dirigé selon le sens initial de montage de manière à solidariser la coque de fermeture (16) et la coque support (14) par des moyens d'agrafage (36).

7. Agencement selon l'une quelconque des revendications 2 à 6, **caractérisé en ce que** des moyens de maintien (42) de la coque de fermeture (16) contre la coque support (14) sont répartis le long des bords (22, 32, 24, 44) de la coque support (14).

8. Agencement selon l'une quelconque des revendications 2 à 7, **caractérisé en ce que** la coque de fermeture (16) comporte au moins un moyen de verrouillage de la coque de fermeture (16) en position montée.

9. Agencement selon la revendication précédente, **caractérisé en ce que** le moyen de verrouillage est constitué par la coopération du pion (40) avec le logement (28).

## Claims

1. Arrangement of a trim element forming a gripping handle of axis (X), comprising at least one support shell (14), which bears in use against a panel (12), and a closure shell (16) which cooperates with the support shell (14) in at least a first and a second junction plane, **characterized in that** the first junction plane and the second junction plane are connected, in a front portion of the handle, by an enveloping surface (34) forming a continuous gripping region which is extended, substantially as far as the axis (X), by a partial overlapping of the closure shell (16), the surface (34) being formed by the support shell (14).

2. Arrangement according to Claim 1, **characterized in that** the closure shell (16) passes, with a translational movement whose direction is substantially parallel to the plane of the support (12) from an initial fitting position to an intermediate position, the arrangement comprising means for guiding the closure shell (16) in this direction and means for pre-holding the closure shell (16) in the intermediate position.

3. Arrangement according to the preceding claim, **characterized in that** the guide means consist of a pin (40), carried by the closure shell (16), which is able to slide along a bearing wall (26) of the support shell (14), substantially parallel to the support plane (12), until the pin (40) enters a housing (28) provided in the said wall (26).

4. Arrangement according to the preceding claim, **characterized in that** the guide means additionally comprise a V-shaped rib (30) located at the periphery of the housing (28) so as to be able to guide the pin (40) as far as the said housing (28) and to form a stop.

5. Arrangement according to any one of Claims 2 to 4, **characterized in that** the means for pre-holding in the intermediate position are formed by the cooperation of the pin (40) with the housing (28).

6. Arrangement according to any one of Claims 2 to 5, **characterized in that** the closure shell (16) passes from its intermediate position to a final mounting position by means of a pressing action which is directed in the initial mounting direction so as to secure the closure shell (16) and the support shell (14) by fastening means (36).

7. Arrangement according to any one of Claims 2 to 6, **characterized in that** means (42) for holding the closure shell (16) against the support shell (14) are distributed along the edges (22, 32, 24, 44) of the support shell (14).

8. Arrangement according to any one of Claims 2 to 7, **characterized in that** the closure shell (16) comprises at least one means for locking the closure shell (16) in the mounted position.

9. Arrangement according to the preceding claim, **characterized in that** the locking means is formed by the cooperation of the pin (40) with the housing (28).

## Patentansprüche

1. Anordnung eines Verkleidungselements, das einen Handgriff mit Achse (X) bildet, mit wenigstens einer Tragschale (14), die sich bei der Verwendung an einer Platte (12) abstützt, und einer Abschlussschale (16), die mit der Tragschale (14) zumindest in einer ersten und in einer zweiten Verbindungsebene zusammenwirkt, **dadurch gekennzeichnet, dass** die erste und die zweite Verbindungsebene in einem vorderen Teil des Griffs durch eine Hülloberfläche (34) verbunden sind, die eine ununterbrochene Greifzone bildet, die im Wesentlichen bis zur Achse (X) durch eine Teilabdeckung der Abschlussschale (16) verlängert ist, wobei die Fläche (34) durch die Tragschale (14) gebildet ist.

2. Anordnung nach Anspruch 1, **dadurch gekennzeichnet, dass** sich die Abschlussschale (16) bei einer translatorischen Bewegung, deren Richtung zu der Unterstützungsebene (12) im Wesentlichen parallel ist, von einer Anfangsposition für die Anbringung in eine Zwischenposition bewegt, wobei die Anordnung Mittel zum Führen der Abschlussschale (16) in dieser Richtung und Mittel zum vorherigen Halten der Abschlussschale (16) in der Zwischenposition enthält.

3. Anordnung nach dem vorhergehenden Anspruch, **dadurch gekennzeichnet, dass** die Führungsmittel aus einem Zapfen (40) bestehen, der von der Abschlussschale (16) getragen wird und längs einer Abstützwand (26) der Tragschale (14) im Wesentlichen parallel zur Unterstützungsebene (12) gleiten kann, bis der Zapfen (40) in einen in der Wand (26) ausgebildeten Aufnahmeraum (28) eindringt.

4. Anordnung nach dem vorhergehenden Anspruch, **dadurch gekennzeichnet, dass** die Führungsmittel außerdem eine V-förmige Rippe (30) enthalten, die sich am Umfang des Aufnahmeraums (28) befindet, derart, dass der Zapfen (40) bis zum Aufnahmeraum (28) geführt werden kann und ein Anschlag gebildet wird.

5. Anordnung nach einem der Ansprüche 2 bis 4, **dadurch gekennzeichnet, dass** die Mittel zum vorhergehenden Halten in der Zwischenposition durch die Zusammenwirkung des Zapfens (40) mit dem Aufnahmeraum (28) gebildet sind.

6. Anordnung nach einem der Ansprüche 2 bis 5, **dadurch gekennzeichnet, dass** sich die Abschlussschale (16) aus ihrer Zwischenposition in eine Montage-Endposition durch eine Abstützung bewegt, deren Richtung in der anfänglichen Richtung der Montage orientiert ist, derart, dass die Abschlussschale (16) und die Tragschale (14) durch Falzmittel (36) verbunden sind.

7. Anordnung nach einem der Ansprüche 2 bis 6, **dadurch gekennzeichnet, dass** die Mittel (42) zum Halten der Abschlussschale (16) an der Tragschale (14) längs der Ränder (22, 32, 24, 44) der Tragschale (14) verteilt sind.

8. Anordnung nach einem der Ansprüche 2 bis 7, **dadurch gekennzeichnet, dass** die Abschlussschale (16) wenigstens ein Mittel zum Verriegeln der Abschlussschale (16) in der montierten Position enthält.

9. Anordnung nach dem vorhergehenden Anspruch, **dadurch gekennzeichnet, dass** das Verriegelungsmittel durch die Zusammenwirkung des Zapfens (40) mit dem Aufnahmeraum (28) gebildet ist.
